# EUROPEAN PATENT SPECIFICATION

(11) **EP 4 377 394 B1**
(45) Date of publication and mention of the grant of the patent: **09.12.2026**
(21) Application number: 22751148.2
(22) Date of filing: 29.07.2022
(51) Int. Cl.: C08L 67/02, B33Y 70/00, B33Y 80/00, B65D 63/10, C08K 3/34, C08K 5/00, C08K 5/10, C08K 5/11, C08K 5/053, C08L 67/04

(54) **BIODEGRADABLE PLASTIC COMPOSITION**
BIOLOGISCH ABBAUBARE KUNSTSTOFFZUSAMMENSETZUNG
COMPOSITION PLASTIQUE BIODÉGRADABLE

(30) Priority: 30.07.2021 GB 202111050
(43) Date of publication of application: 05.06.2024
(73) Proprietor: Chestnut Bio Polymers Ltd, Darlington DL1 2PB (GB)
(72) Inventor: BROWN, Ian E., Newcastle upon Tyne, Tyne and Wear NE1 2PA (GB)
(74) Representative: Definition IP Limited
(86) International application number: PCT/GB2022/052011
(87) International publication number: WO 2023/007186

(56) References cited:
- WO-A1-2016/058097
- WO-A1-2016/138593
- WO-A1-2017/087658
- WO-A1-2020/252233
- CN-A- 105 602 215

## Description

### Field of the Invention

The present invention relates to a biodegradable plastic composition and use of the biodegradable plastic composition in disposable products, for example, a tree guard, a cable tie and other articles formed from said biodegradable plastic composition.

### Background of the Invention

Products formed from plastic materials are commonly used in the natural environment, including guards for seeds, plants and saplings, weed mats and cable ties. The term 'plastic' as used herein, means a material having a polymer as a main ingredient. Due to the potential for plastic materials to pollute the natural environment, efforts are being made to provide environmentally-friendly plastic compositions with a finite lifespan, such that when the product has served its purpose, it safely degrades in the natural environment.

For example, cable ties are typically formed of hard plastics material, such as nylon (polyamide 6-6), which is not biodegradable. Cable ties of this type are often used to temporarily affix notices to existing structures, such as during festivals. Festivals typically last from 2 to 3 days to 1 to 2 weeks and subsequently, the notices are removed and the cable ties discarded. In particular, the cable ties must be collected and disposed of in an appropriate manner, in order to avoid polluting the local environment. However, cable ties may easily go unnoticed and can remain as a waste problem in the natural environment.

In addition, millions of single-use plastic tree guards are used every year in the woodland and forestry industry to protect saplings in the early stages of their growth. Tree protectors can increase the survival rate of young trees by protecting sapling from damage caused by environment factors, such as wind or frost, and from damage by wild animals.

Most tree guards are constructed from polypropylene, high density polyethylene and poly(vinyl chloride), which do not biodegrade when discarded in the natural environment or using established technologies (e.g. anaerobic digestion, composting), and instead remain as a persistent waste problem. For example, it is estimated that these polymers take more than 100 years to disintegrate in the environment/oceans into microplastics, exacerbating their negative environmental impact. As such, the removal of tree guards is required in most cases after the tree is sufficiently mature to no longer require protection in order to avoid littering the landscape and/or posing a potential danger to local wildlife. However, collecting used tree guards is often not economically viable and/or practical. Furthermore, even tree shelters that are retrieved at the end of their lifetime will often end up in landfill sites.

It is therefore desirable to develop alternative materials for disposable products such as tree guards and cable ties that have comparable characteristics to existing fossil-based products but are environmentally compatible.

Tree guards have been produced from photo-degradable plastics materials based on polyethylene, polypropylene and polycarbonate. In such cases, the degradation process uses oxidative processes and Ultra Violet (UV) radiation breakdown of the polymers, rather than microbial attack. The former processes are difficult to control when a specific life cycle is required. This is particularly the case for tree guards, which must last sufficiently long enough to allow a tree to reach maturity (e.g. approximately five years) without degrading too slow so as to hamper the tree's growth and remaining in the environment for extended periods after use.

It is therefore necessary in some circumstances that a tree guard last for up to approximately five years before the tree guard begins its biodegradation process.

In contrast, photo-degradable products often fail to degrade fully within the desired time frame and instead disintegrate gradually over a period between 10 to 15 years into large pieces, which may litter the planting area and/or be distributed by the wind. Further, the inclusion of additives to such tree guards to promote UV photodegradation may result in micro-fibres and micro-plastics being dispersed into the environment.

Tree guards made from polylactic acid (PLA) have also been proposed and claim to be fully biodegradable. However, the biodegradation of PLA requires specific conditions, which are not typically conducive to natural biodegradation. More specifically, the biodegradation process of PLA only occurs in the presence of moisture and temperatures in excess of 60 °C, which are required to initiate the self-hydrolysation process. Therefore, the biodegradation of PLA typically requires industrial large-vessel composting environments and shows very little mineralisation. The use of PLA and its accumulation in the environment may therefore still present pollution problems.

CN105602215A discloses a biodegradable heat-resistant sheet prepared from polylactic acid and other biodegradable polyesters.

It is therefore desirable to develop a biodegradable plastic composition that is degradable in the natural environment within timeframes suitable for its intended use and without requiring the application of any external factors to aid degradation. Further, the biodegradable plastic composition will desirably have suitable physical characteristics for the intended use, such as in the production of tree guards and the like.

### Summary of Invention

In a first aspect, there is provided a biodegradable plastic composition, comprising: poly(butylene succinate) (PBS) in an amount between 28 to 90 wt.%; poly(3-hydroxybutyrate-co-valerate) (PHBV) in an amount between 5 to 35 wt.%; and at least one of:
a) a biodegradation delay polymer (BDP) in the amount of 10 wt.% or less, wherein the BDP comprises polycaprolactone (PCL), poly(butylene sebacate) (PBSeb) or a combination thereof; and
b) a plasticiser in an amount of 13 wt.% or less, wherein the plasticiser comprises a citric acid ester, glycerol, glycerol triacetate or a combination thereof.

The term 'biodegradable plastic composition' as used herein, means a material formed from a blend of biodegradable polymers.

The term "biodegradable" as used herein, means degradable by the action of naturally occurring microorganisms such as bacteria, fungi and algae. Such biodegradation yields carbon dioxide (CO₂), water, inorganic compounds and biomass, at a rate consistent with other compostable materials, leaving no visible, distinguishable or toxic residue as set forth in ASTM D6400. In other words, the biodegradable plastic composition herein may be characterised as biodegradable in accordance with the standard ASTM D6400.

As used herein, a biodegradation delay polymer means a polymer that slows the rate of biodegradation of the biodegradable plastic composition. A slower biodegradation rate means that the biodegradable polymers or biodegradable plastic compositions herein exhibit a delayed biodegradation rate over biodegradable plastic compositions not including a BDP, thereby enhancing the lifetime of such compositions. For example, the BDP may be a hydrophobic polymer, which may reduce water-uptake by the composition and thereby reduce its biodegradation rate. According to the present invention, the BDP includes a ASTM D6400-type biodegradable polymer comprising polycaprolactone (PCL), poly(butylene sebacate) (PBSeb) or a combination thereof.

PBS and PHBV are biocompatible polymer plastics that undergo biodegradation under environmental conditions, for example, within a period of two years. When used in combination in the claimed amounts, the resulting composition has a suitable strength and rigidity, while being sufficiently flexible for use in the manufacture of plastic articles such as tree guards, weed mats and cable ties.

While a relatively short biodegradation period may be desirable in certain circumstances, many other applications require longer lifetimes. It has been surprisingly found that the inclusion of a BDP such as PCL or PBSeb, which are hydrophobic but very soft polymers, in the amount of 10 wt.% or less can synergistically extend the lifetime under environmental conditions while maintaining suitable physical characteristics of the biodegradable plastic composition.

The amount of BDP present in the composition may be tailored according to the desired degradation lifetime. For example, the amount of BDP may be reduced, or omitted altogether, when a shorter lifetime for the composition is desired. Optionally, the BDP may be present in an amount of 5 wt% or less.

Advantageously, the inclusion of a plasticiser may increase the flexibility of the composition and improve mixing during manufacture.

Additionally, or alternatively, the biodegradable plastic composition may further comprise one or more antidegradation agents selected from the group consisting of a hydrophobic additive, an inorganic filler, an antioxidant and/or a UV stabiliser. The term "antidegradation agent" as used herein means an agent capable of slowing or inhibiting biodegradation.

Optionally, the hydrophobic additive may comprise a natural wax. For example, the natural wax may be selected from eurikas wax, carnauba wax, sunflower wax, bees wax, rice bran wax, candelilla wax, or a combination thereof. Advantageously, the hydrophobic additive, such as a natural wax, may slow the biodegradation rate by reducing water uptake by the biodegradable plastic composition.

Optionally, the inorganic filler may be selected from mica, silica (silicon dioxide), calcium metasilicate, calcium carbonate, china clay (Kaolin), a biochar material, or a combination thereof. The inorganic filler may slow the biodegradation rate by again reducing water uptake in the biodegradable plastic composition. The inorganic filler may also improve the mechanical properties of the composition, such as the strength and rigidity. Additionally, the inclusion of a relatively inexpensive inorganic filler may allow for a lower polymer loading, thereby reducing manufacturing costs. The inorganic filler, mica, has also been shown to prevent degradation by UV, for example, in cosmetics, coatings and paints.

A biochar material as used herein means a material that has been formed during the gasification and/or pyrolysis of organic and biogenic matter such as lignocellulosic materials, including wood, agricultural residues, forestry residues, and municipal waste.

One or more antioxidants may be added to the composition to prevent, inhibit, or reduce polymer biodegradation occurring through oxidative processes. Antioxidants are molecules that scavenge free radical. "Free radicals" refer to atomic or molecular species with unpaired electrons on an otherwise open shell configuration, and can be formed by oxidation reactions. Optionally, the antioxidant may be selected from ascorbic acid and/or ethyl maltol, which are both non-toxic.

The UV stabiliser may be 2-(2'-hydroxy-5'-methylphenyl)benzotriazole, which is sold under the tradename Pamsorb-P^{™}, suitable for use in plastics for food packaging. Alternatively, the UV stabiliser may be 4-hydroxy-2,2,6,6-tetramethyl-1-piperidine ethanol-dimethyl succinate copolymer (TINUVIN^{®} 622), which contains no components considered to be either persistent, bioaccumulative or toxic.

The biodegradable plastic composition may further comprise a reinforcing filler. For example, the reinforcing filler may comprise a natural fibre selected from the group consisting of jute, hemp, flax, pineapple, rice husks, bamboo fibre, coconut fibre, banana fibre, rhubarb fibre or any combinations thereof. Advantageously, the reinforcing filler may improve the mechanical properties of the composition, such as strength and rigidity. Additionally, the inclusion of a relatively inexpensive reinforcing filler may allow for a lower polymer loading, thereby reducing manufacturing costs.

Optionally, the biodegradable plastic composition may further comprise an animal repellent. For example, the animal repellent may be non-toxic sucrose octaacetate. The inclusion of an animal repellent may be advantageous for products used in the natural environment and which may be subject to attack from animals, such as deer, bears, beavers, and rodents.

The biodegradable plastic composition may be substantially free of polylactic acid (PLA). Alternatives to PLA are considered advantageous since PLA does not typically degrade under environmental conditions. Instead, the biodegradation process of PLA only occurs in the presence of moisture and temperatures in excess of 60 °C and so typically requires industrial composting conditions. In addition, PLA shows very little mineralisation so its accumulation in the environment may cause a further environmental waste issue.

The biodegradation plastic composition may be non-toxic to avoid pollution of the surrounding environment.

In a second aspect, there is provided a tree guard formed from a biodegradable plastic composition comprising: poly(butylene succinate) (PBS) in an amount between 28 to 90 wt.%; poly(3-hydroxybutyrate-co-valerate) (PHBV) in an amount between 5 to 35 wt.%; and a biodegradation delay polymer (BDP) in the amount of 10 wt.% or less, wherein the BDP comprises polycaprolactone (PCL), poly(butylene sebacate) (PBSeb) or a combination thereof. The biodegradable plastic composition may further comprise a plasticiser in an amount of 13 wt.% or less. Advantageously, such tree guards biodegrade in the natural environment, leaving no toxic residues in the soil after biodegradation, and so their removal after the tree guard as fulfilled its purpose is not necessary.

Optionally, the biodegradable plastic composition forming the tree guard may further comprise:
an inorganic filler in an amount of 30 wt.% or less;
an antioxidant in an amount of 1 wt.% or less;
an animal repellent in an amount of 1 wt.% or less;
a hydrophobic additive in an amount between 0 and 10 wt.%;
a reinforcing filler in an amount between 0 and 30 wt.%; and
a UV stabiliser in an amount between 0 and 1 wt.%.

The tree guard may be coated with a hydrophobic coating. For example, the hydrophobic coating comprises a natural wax selected from the group consisting of eurikas wax, carnauba wax, sunflower wax, bees wax, rice bran wax, candelilla wax, or a combination thereof. Advantageously, a hydrophobic coating acts to repel water, thereby preventing water ingress and further slowing the biodegradation rate of the tree guard.

In a third aspect there is provided a cable tie formed from a biodegradable plastic composition comprising poly(butylene succinate) (PBS) in an amount between 28 to 90 wt.%; poly(3-hydroxybutyrate-co-valerate) (PHBV) in an amount between 5 to 35 wt.%; and, a plasticiser comprising a citric acid ester, glycerol or glycerol triacetate in an amount of 13 wt.% or less. The biodegradable plastic composition may further comprise a biodegradation delay polymer (BDP) in the amount of 10 wt.% or less, wherein the BDP comprises polycaprolactone (PCL), poly(butylene sebacate) (PBSeb) or a combination thereof. However, for some uses, it may be advantageous for a cable tie to biodegrade in a relatively short time period such that inclusion of a BDP, such as PCL or PBSeb, is not required. Advantageously, such cable ties will still biodegrade in the natural environment, leaving no toxic residues in the soil after biodegradation.

In a fourth aspect, there is provided an article comprising the biodegradable plastic composition according to the first aspect. Optionally, the article may comprise one of the following: a forestry product, an agricultural product, horticulture product, or a viticulture product. For example, the article may comprise one of the following: a seed guard, a plant guard, a tree guard, a cable tie or a weed mat. Alternatively, the article may be a packaging product such as food packaging.

In a fifth aspect of the present invention, there is provide a method of forming the article of the fourth aspect comprising melt extruding, optionally 3D printing, the biodegradable plastic composition to form the article.

### Brief Description of Figures

The accompanying drawings illustrate presently exemplary embodiments of the disclosure, and together with the general description given above and the detailed description of the embodiments given below, serve to explain, by way of example, the principles of the disclosure.
Figure 1 shows a schematic drawing of a tree guard;
Figure 2 shows the specimen dimensions for Type 1BA samples according to ISO-527-2 used for tensile measurements of blends for cable tie and tree guard;
Figure 3 shows the results of the tensile measurements (Modulus and Yield Stress) for Blend Set-T;
Figure 4 shows the results of the water uptake measurements determined for Blend Set-T;
Figure 5 shows the results of the scratch test measurements for Blend Set-T;
Figure 6 shows the melt rheology of blends 1, 2, 4, 6, 8 and 9, magnified to highlight behaviour between 170 °C and 200 °C;
Figure 7 shows an example of a 3D printed Cable Tie 3D from Blend 1;
Figure 8 shows photographs of samples taken at different exposure times between 0 and 6000 h;
Figure 9 shows example Infra Red (IR) spectra of samples taken during accelerated weathering test after 0h, 1000h, 2000h, 3000h and 4000h;
Figure 10 shows example Optical Microscopy images of samples after 1000h, 2000h, 3000h, 4000h 5000h and 6000h exposure to accelerated weathering conditions;
Figure 11 shows example SEM images of samples after 1000h, 2000h, 3000h, 4000h 5000h and 6000h exposure to accelerated weathering conditions; and
Figure 12 shows thermogravimetic Analysis (TGA) of a typical sample at 0h and 5000h (simulating 5 years in agricultural and horticultural applications).

### Detailed Description

While compositions and methods are described herein in terms of "comprising" various components or steps, the compositions and methods can also "consist essentially of" or "consist of" the various components or steps, unless stated otherwise.

The present invention provides a biodegradable plastic composition comprising poly(butylene succinate) (PBS) in an amount between 28 to 90 wt.%; poly(3-hydroxybutyrate-co-valerate) (PHBV) in an amount between 5 to 35 wt.%; and at least one of:
a) a biodegradation delay polymer (BDP) in the amount of 10 wt.% or less, wherein the BDP comprises polycaprolactone (PCL), poly(butylene sebacate) (PBSeb) or a combination thereof; and
b) a plasticiser in an amount of 13 wt.% or less, wherein the plasticiser comprises a citric acid ester, glycerol, glycerol triacetate or a combination thereof.

An important consideration for a biodegradable plastic composition is the need to be cost efficient to process and manufacture on an industrial scale, for example, using extrusion, injection moulding, compression moulding, thermoforming or 3D printing. The thermal properties of PBS are well-suited for melt extrusion when processed using industrial scale equipment. However, PBS is alone is too flexible and flimsy for many applications. The inclusion of PHBV in the biodegradable plastic composition adds strength and rigidity to PBS. In some circumstances, the inclusion of a BDP may also be required to extend the biodegradation lifetime under environmental conditions but must be limited to maintain suitable physical characteristics of the biodegradable plastic composition.

PBS and PHBV biodegrade due to hydrolysis under environmental conditions, for example, within a time period of two years. While this may be desirable in certain circumstances, many other applications require longer lifetimes. This is particularly the case for tree guards, which must last sufficiently long enough to allow a tree to reach maturity (e.g. approximately five years in agricultural and horticultural applications) without degrading too slow so as to hamper the tree's growth and remaining in the environment for extended periods after use. The inclusion of a BDP in the amount of 10 wt.% or less can extend the lifetime under environmental conditions without compromising the desirable physical characteristics of the biodegradable plastic composition.

According to the present invention, the BDP includes a ASTM D6400-type biodegradable polymer comprising polycaprolactone (PCL), poly(butylene sebacate) (PBSeb) or a combination thereof. PCL and PolyBSeb are a relatively hydrophobic, slowly degrading semi-crystalline biopolymers. The water uptake analysis shown in Table 1 below indicates that PCL and PBSeb take up roughly one third of the water that PBS is shown to take up. This suggests PCL and PBSeb are roughly, around three times more hydrophobic than PBS. Moreover, the same analysis shows that PCL and PBSeb are around 45% and 78%, respectively, more hydrophobic than PHBV. The hydrophobic nature of PCL and PBSeb reduces water-uptake, thereby reducing the biodegradation rate of the composition.

**Table 1: % water uptake of PBS, PHBV, BDP1(PCL) and BDP2 (PBSeb) determined using DVS.**

| **Biopolymers** | **Water Uptake %** |
|---|---|
| PBS | 0.61 |
| PHBV | 0.32 |
| BDP1: PCL | 0.22 |
| BDP2: PBSeb | 0.18 |

Accordingly, the combination of PBS and PHBV provides a composition having physical characteristics and biodegradation lifetimes that are suitable for a wide variety of applications, which may be extended further as required by the inclusion of a BDP e.g., for use in agricultural and horticultural applications.

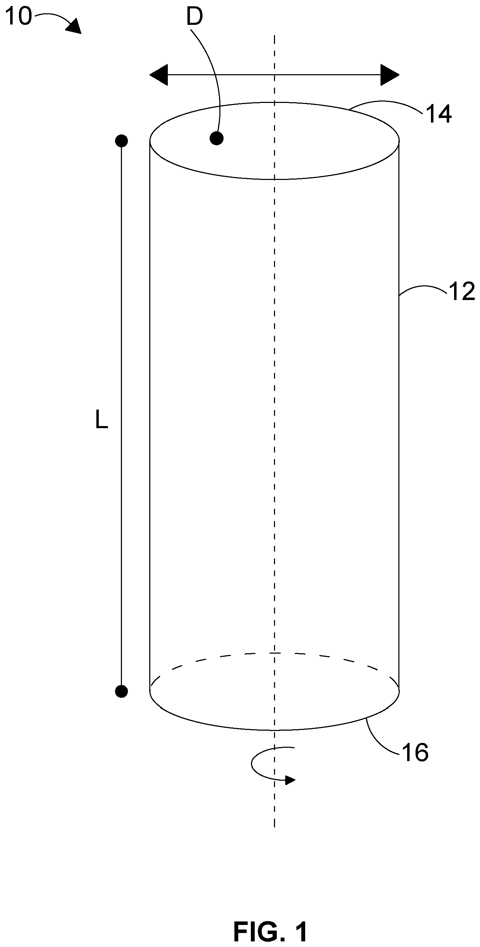

For example, the biodegradable plastic composition may be used in the fabrication of a tree guard. A tree guard, or tree shelter, is used to protect saplings in the early stages of their growth. An exemplary tree guard is shown in Figure 1. The tree guard 10 comprises a longitudinal tubular body 12 having a first edge 14 and a second edge 16. Although a cylindrical shape is illustrated in Figure 1, it should be understood that the shape may be square, conical or any suitable shape configured from a flat sheet. Existing tree guards are typically made from single-use plastics and are often left to disintegrate in the environment when a tree grows to maturity. It is therefore desirable to develop a tree guard formed of a readily biodegradable material that biodegrades in the natural environment without leaving any toxic residues in the soil and possesses physical properties, such as strength and rigidity, that are comparable to commercial benchmarks made from fossil-based plastics.

Tree guards formed from the biodegradable plastic composition herein may be produced using extrusion methods. The composition may be extruded as tubes or flat sheets of a single-thickness according to the dimensions of length (L) and diameter (D) as required for specific saplings. The simple of design of the tree guards is well-suited to mass production, application in the field, with the benefit of keeping costs to a minimum.

In use, the tree guard may be supported using cable ties also manufactured from the biodegradable plastic composition and/or wooden stakes.

### Examples

### Preparation of blends

Prior to melt processing of the formulations, polymer materials were dried using a Motan Luxor CA15 hot air dryer. Due to the differing melting points of the component materials, different drying conditions were used for each as laid out in Table 2 below. The purpose of this was to remove any moisture from the raw materials as the presence of water may lead to degradation of polyesters during melt processing. After drying, all materials were vacuum-sealed until required and used within 1 week of drying.

**Table 2: Conditions used to dry the raw polymer materials**

| **Biopolymer** | **Drying Conditions** | **Comments** |
|---|---|---|
| **PBS** | 75 °C, 3-4 hours | Compressed air dryer |
| **PHBV** | 75 °C, 4-5 hours | Compressed air dryer |
| **PCL** | 30 °C, 1-2 hours | Vacuum oven |
| **PBSeb** | 30 °C, 1-2 hours | Vacuum oven |

The biodegradable plastic compositions disclosed herein were prepared using the dried polymer materials prepared as outlined above. Each composition blend was manually mixed and then extruded using a Rondol MicroLab twin screw extruder (10 mm screw diameter, L/D ratio 20:1) fitted with a single strand filament die. The blend extrudate was passed through a cold-water bath before being wound onto a spool and collected as a filament. The conditions used for extrusion processing of the blends are detailed in Table 3.

**Table 3: Conditions used for extrusion processing of polymer blends.**

| **Feed temperature / °C** | **Barrel 1 temperature / °C** | **Barrel 2 temperature / °C** | **Die temperature / °C** | **Screw Speed / rpm** |
|---|---|---|---|---|
| 165 | 175 | 180 | 160 | 75 |

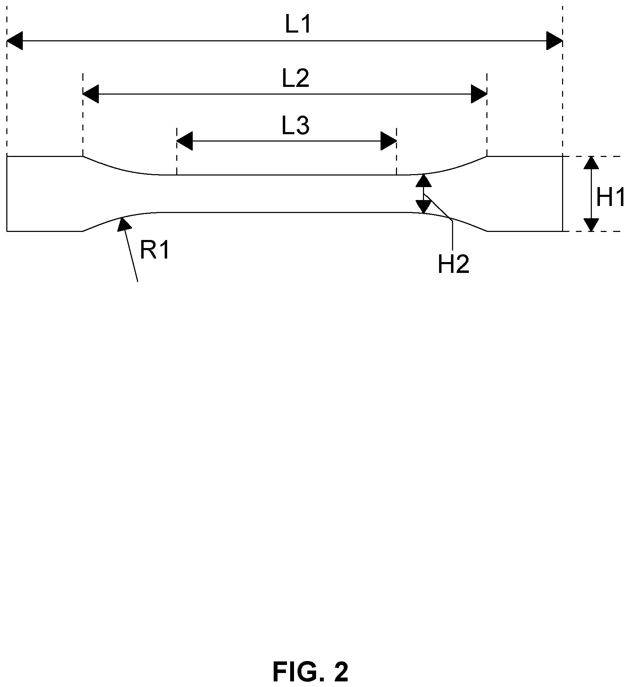

The filaments produced were pelletised and then re-dried in the Motan Luxor CA15 drier for 4 hours at 75 °C before any further processing. Each blend was subsequently used to prepare dog-bone samples for tensile measurements meeting the specifications of ISO-527-2 Type 1BA, as shown in Figure 2, where L1 = ~75 mm, L2 = 58 mm, L3 = 30 mm, H1 = 10 mm, H2 = 5 mm, R1 = 30 mm. Specimens were prepared using a ThermoScientific Haake MiniJet Pro Injection moulder using the conditions in Table 4.

**Table 4: Conditions used for the injection moulding of each polymer blend.**

| **Cylinder temperature / °C** | **Mould temperature / °C** | **Injection pressure / bar** | **Injection time / s** | **Hold pressure / bar** | **Hold time / s** |
|---|---|---|---|---|---|
| 215.0 | 22.0 - 27.0 | 650.0 | 10.0 | 750.0 | 10.0 |

### Tree Guard Compositions

As noted above, tree guards must last sufficiently long enough to allow a tree to reach maturity (e.g. approximately five years) without degrading too slow so as to hamper the tree's growth and remaining in the environment for extended periods after use. The inclusion of a BDP may extend the biodegradation lifetime under environmental conditions but must be limited to maintain suitable physical characteristics of the biodegradable plastic composition. In particular, it has been found that the inclusion of a BDP in the amount of 10 wt.% or less can extend the lifetime under environmental conditions without compromising the desirable physical characteristics of the biodegradable plastic composition.

According to the present invention, the BDP includes a ASTM D6400-type biodegradable polymer comprising polycaprolactone (PCL), poly(butylene sebacate) (PBSeb) or a combination thereof. However, the amount of such polymers in the composition must be carefully balanced with the other components to avoid having a detrimental effect on the strength and rigidity of the polymer composition. This is demonstrated in Table 5 below, which shows that the modulus of elasticity and yield stress of PCL and PBSeb are lower than those observed for both PBS and PHBV.

**Table 5: Mechanical properties of PBS, PHBV, BDP1 (PCL) and BDP2 (PBSeb).**

| **Biopolymers** | **Modulus MPa** | **Yield Stress MPa** |
|---|---|---|
| **PBS** | 511 | 41 |
| **PHBV** | 1475 | 42 |
| **BDP1: PCL** | 254 | 19 |
| **BDP2: PBSeb** | 370 | 20 |

The biodegradable plastic composition may further comprise one or more additives to further improve the biodegradation life-time and/or the strength and rigidity of a resulting article formed of the biodegradable plastic composition. To evaluate the effect(s) of individual additives on mechanical characteristics, a range of biodegradable plastic composition blends comprising different additives were prepared (Blend Set-B), as detailed in Table 6 below. Dog-bone samples for tensile measurements were prepared using each blend as described above in Table 3 and Table 4. Testing was carried out using an Instron 5967 Universal Mechanical Testing machine using a 30 kN load cell. This was used together with 10kN screw action grips to prevent specimen slippage. Tests were carried out according to the ISO527-2 standard where possible.

The modulus of elasticity, yield stress and water uptake was determined for each composition, and are summarised in Table 6. For comparison purposes, the properties of known polymers for similar uses are also provided. For example, polypropylene (PP) typically has the required balance of flexibility and strength/rigidity but is not biodegradable, taking between 50 to 100 years to degrade and releases toxins in the process. High density polyethylene (HDPE) may also provide a suitable balance of properties but again is not biodegradable, persisting for hundreds of years and sometimes indefinitely. Finally, polylactic acid is a soft, flexible polymer, which is often used as a replacement to non-biodegradable polymers but is not truly biodegradable as discussed in further detail above.

**Table 6: Compositions and mechanical properties of Blend Set-B. The weight percentage of each component is shown in parentheses. Only composition B6 is according to the invention.**

| Blend No | Compositions (wt%) | Modulus MPa | Yield Stress MPa | water uptake % |
|---|---|---|---|---|
| **B1** | PBS (70)/PHBV(30) | 1000 | 37 | 0.60 |
| **B4** | PBS(69)/PHBV(30)/Ascorbic Acid (1) | 1000 | 36 | 0.72 |
| **B6** | PBS(67)/PHBV(28)/A4 Plasticiser (5) | 800 | 31 | 0.55 |
| **B7** | PBS(49)/PHBV(21)/Calcium Metasilicate (30) | 1200 | 33 | 0.48 |
| **B8** | PBS(49)/PHBV(21)/Mica (30) | 1800 | 41 | 0.49 |
| **B9** | PBS(63)/PHBV(27)/Carnauba Wax (10) | 900 | 32 | 0.54 |
| **B10** | PBS(63)/PHBV(27)/Eurikas Wax (10) | 800 | 28 | 0.55 |
| **B11** | PBS(49)/PHBV(21)/Coconut Fibre (30) | 1500 | 40 | 2.32 |
| **B12** | PBS(49)/PHBV(21)/Bamboo Fibre (30) | 1400 | 37 | 1.85 |
| | PP | 1400 | 32 | -- |
| | HDPE | 1000 | 26 | -- |
| | PLA | 2400 | 0 | -- |

As shown in Table 6, the inclusion of any of a citrate-based A4 plasticiser (available under the trade name Citroflex^{™} A-4), calcium metasilicate, mica, carnauba wax and eurikas wax led to a reduction in water uptake. As noted above, a reduction in water-uptake is typically associated with a lower rate of biodegradation. The inclusion of either coconut fibre or bamboo fibre in an amount of 30 wt% increased the strength of the blends but led to a significant increase in water uptake.

Based on these results, a range of biodegradable plastic composition blends comprising different combinations of additives were prepared and their mechanical properties tested. The compositions of the various blends, designated Blend Set-D, are detailed in Table 7 below. The effects of the different combinations of additives on the modulus of elasticity, yield stress, water uptake and flexural strength of the resulting biodegradable plastic composition are shown in Table 8.

**Table 7: Compositions of Blend Set-D with the weight percentage of each component is shown in parentheses.**

| **Blend No** | **Compositions (wt%)** |
|---|---|
| **D1** | PBS(46)/PHBV(15.3)/PCL(7.7)/A4(8)/mica(23) |
| **D2** | PBS(40)/PHBV(20)/A4(5)/mica(30)/bamboo(5) |
| **D3** | PBS(41.9)/PHBV(31.4)/A4(10.5)/mica(10.5)/wax(5.8) |
| **D4** | PBS(28.5)/PHBV(28.5)/PCL(3.9)/A4(10.7)/mica(21.4)/wax(3.6)/bamboo(3.6) |
| **D5** | PBS(44.3)/PHBV(29.5)/PCL(4.1)/A4(7.4)/mica(7.4)/bamboo(7.4) |
| **D6** | PBS(53.8)/PHBV(17.9)/PCL(4.9)/A4(4.5)/mica(9)/wax(5.4)/bamboo(4.5) |
| **D7** | PBS(35.9)/PHBV(17.9)/PCL(4.9)/A4(13.5)/mica(18.8)/wax(9) |
| **D8** | PBS(40.2)/PHBV(20.1)/PCL(10.1)/A4(5)/mica(10.1)/wax(4.5)/bamboo(10.1) |
| **D9** | PBS(33.2)/PHBV(33.2)/PCL(8.3)/A4(7.5)/mica(14.9)/bamboo(2.9) |
| **D10** | PBS(34.9)/PHBV(27.4)/PCL(6.8)/A4(3.4)/mica(20.5)/wax(6.8) |
| **D11** | PBS(39.3)/PHBV(26.2)/PCL(6.6)/A4(9.8)/mica(11.1)/wax(3.9)/bamboo(3) |
| **D12** | PBS(45.9)/PHBV(27.5)/PCL(4.6)/A4(4.6)/mica(17.4) |
| **D13** | PBS(45.8)/PHBV(30.5)/A4(3.8)/mica(16.8)/wax(3.1) |
| **D14** | PBS(41.8)/PHBV(33.5)/A4(12.6)/mica(8.4)/bamboo(3.8) |
| **D15** | PBS(52.2)/PHBV(17.4)/A4(13)/mica(8.7)/wax(8.7) |
| **D16** | PBS(41.1)/PHBV(21.2)/A4(6.8)/mica(20.5)/wax(6.8)/bamboo (3.4) |
| **D17** | PBS(43.8)/PHBV(17.2)/A4(9.4)/mica(17.2)/wax(3.9)/bamboo (8.6) |
| **D18** | PBS(41.7)/PHBV(20.1)/PCL(6.9)/A4(10.4)/mica(13.9)/bamboo(6.9) |
| **D19** | PBS(32.3)/PHBV(32.3)/A4(4)/mica(15.3)/wax(8.1)/bamboo(8.1) |
| **D20** | PBS(40.7)/PHBV(16.3)/PCL(8.1)/A4(8.1)/mica(14.6)/wax(8.1)/bamboo(4.1) |

**Table 8: Summary of mechanical properties determined for Blend Set-D.**

| **Blend No** | **Modulus MPa** | **Yield Stress MPa** | **Water Uptake %** | **Flexural Strength MPa** |
|---|---|---|---|---|
| **D1** | 1021 | 31 | 0.57 | 32.1 |
| **D2** | 1615 | 35 | 0.74 | 38.3 |
| **D3** | 817 | 24 | 0.51 | 26.6 |
| **D4** | 1041 | 24 | 0.70 | 37.8 |
| **D5** | 893 | 27 | 1.03 | 29.5 |
| **D6** | 851 | 29 | 0.85 | 28.5 |
| **D7** | 760 | 19 | 0.51 | 24.4 |
| **D8** | 874 | 26 | 1.11 | 29.4 |
| **D9** | 1185 | 33 | 0.71 | 34.3 |
| **D10** | 1676 | 34 | 0.52 | 32.1 |
| **D11** | 872 | 17 | 0.70 | 14.9 |
| **D12** | 983 | 23 | 0.44 | 24.0 |
| **D13** | 1423 | 35 | 0.52 | 37.6 |
| **D14** | 1149 | 29 | 0.73 | 32.2 |
| **D15** | 734 | 31 | 0.62 | 24.6 |
| **D16** | 1304 | 28 | 0.73 | 29.8 |
| **D17** | 1196 | 25 | 1.08 | 27.2 |
| **D18** | 1052 | 25 | 1.08 | 27.1 |
| **D19** | 1705 | 27 | 0.96 | 28.3 |
| **D20** | 787 | 24 | 0.84 | 27.4 |

The results obtained for Blend Set-B and Blend Set-D were then used to predict specific combinations that could provide mechanical and physical properties at least comparable to, if not better than, the polypropylene benchmark. More specifically, this involved selecting blend formulations based on the following requirements: a modulus in the range 1500-2000 MPa, a yield stress in the range 40-50 MPa (i.e. greater than the polypropylene benchmark of modulus 1400 MPa and yield stress 32 MPa) and a flexural strength in the range of 30-40 MPa. A water uptake of <0.9% was also desired in order to moderate the biodegradation lifetime. Additionally, a scratch hardness comparable to or greater than that of the polypropylene benchmark of 100 MPa was also desired.

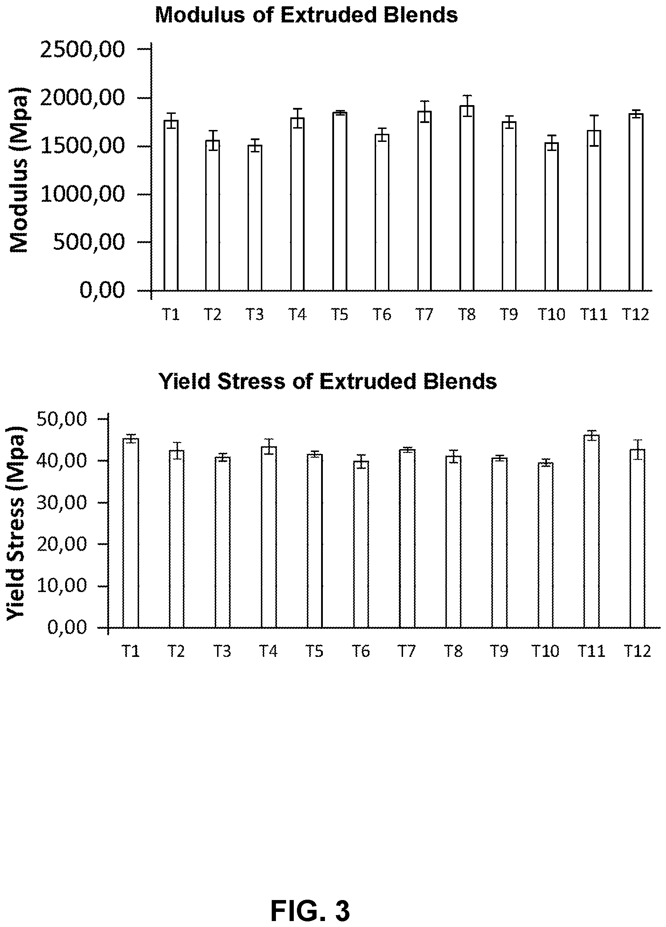

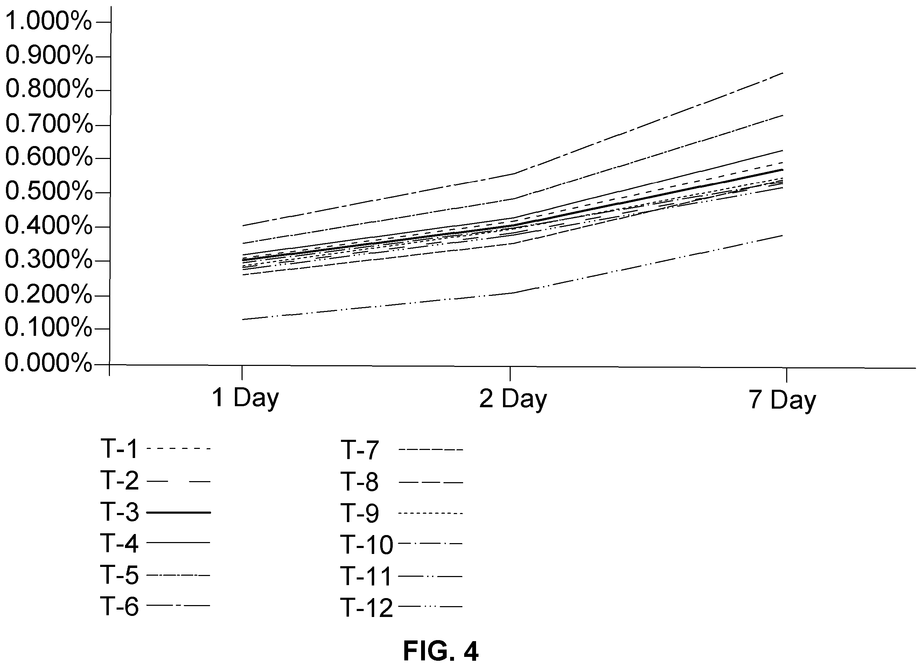

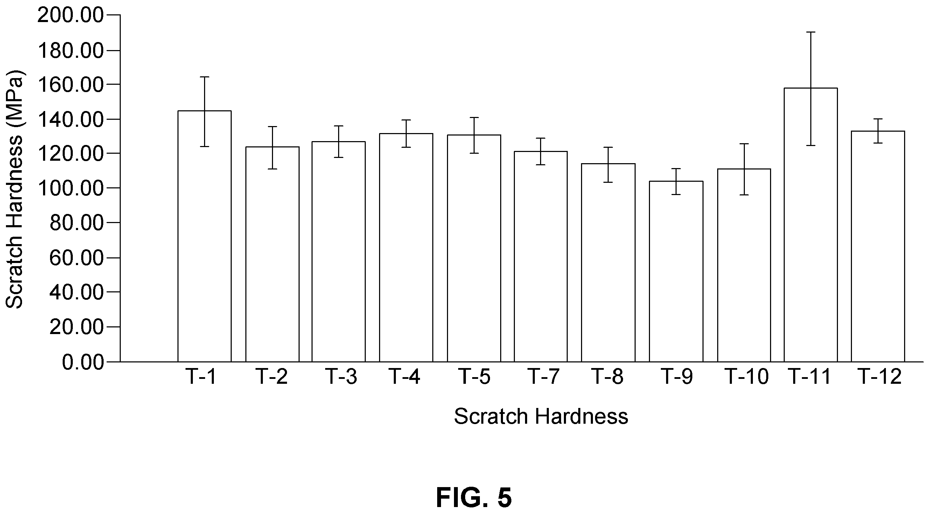

The blend formulations selected for further characterisation and analysis, designated Blend Set-T, are detailed in Table 9 below. The compositions of Blend Set-T also include non-toxic sucrose octaacetate as an animal repellent. The inclusion of an animal repellent may be particularly advantageous for tree guards and other products used in the natural environment and which may be subject to attack from animals, such as deer, bears, beavers, and rodents. Ethyl maltol, which is a known antioxidant, was also included to reduce polymer biodegradation occurring through oxidative processes. The modulus of elasticity, yield stress, water uptake, flexural strength and scratch hardness for Blend Set-T are shown in Figures 3 to 5 and summarised in Table 10.

**Table 9: Compositions of Blend Set-T with the weight percentage of each component is shown in parentheses.**

| **Blend No** | **Compositions (wt%)** |
|---|---|
| **T1** | PBS(50)/PHBV(25)/PCL(5)/A4(2)/mica(18)/EtMaltol(0.15)/Octacet(0.15) |
| **T2** | PBS(50)/PHBV(25)/PCL(5)/A4(3)/mica(17)/EtMaltol(0.15)/Octacet(0.15) |
| **T3** | PBS(50)/PHBV(25)/PCL(5)/A4(4)/mica(16)/EtMaltol(0.15)/Octacet(0.15) |
| **T4** | PBS(50)/PHBV(25)/PCL(5)/A4(2)/mica(17)/EtMaltol(0.15)/Octacet(0.15)/ Bamb(1) |
| **T5** | PBS(50)/PHBV(25)/PCL(5)/A4(2)/mica(15)/EtMaltol(0.15)/Octacet(0.15)/ Bamb(3) |
| **T6** | PBS(50)/PHBV(25)/PCL(5)/A4(2)/mica(13)/EtMaltol(0.15)/Octacet(0.15)/ Bamb(5) |
| **T7** | PBS(45)/PHBV(30)/PCL(5)/A4(2)/mica(18)/EtMaltol(0.15)/Octacet(0.15) |
| **T8** | PBS(45)/PHBV(25)/PCL(10)/A4(2)/mica(18)/EtMaltol(0.15)/Octacet(0.15) |
| **T9** | PBS(45)/PHBV(30)/PCL(5)/A4(4)/mica(16)/EtMaltol(0.15)/Octacet(0.15) |
| **T10** | PBS(45)/PHBV2(25)/PCL(10)/A4(4)/mica(16)/EtMaltol(0.15)/Octacet (0.15) |
| **T11** | PBS(50)/PHBV(25)/PCL(5)/A4(2)/mica(18)/EtMaltol(0.15)/Octacet(0.15)/ Wax coated |
| **T12** | PBS(50)/PHBV(25)/PCL(5)/Triacetin(2)/mica(18)/EtMaltol(0.15)/Octacet (0.15) |

**Table 10: Summary of mechanical and physical properties of Blend Set-T.**

| **Blend No** | **Modulus MPa** | **Yield Stress MPa** | **Water Uptake %** | **Flexural Strength MPa** | **Scratch Hardness MPa** |
|---|---|---|---|---|---|
| **T1** | 1764 | 45 | 0.59 | 35 | 145 |
| **T2** | 1557 | 42 | 0.58 | 32 | 124 |
| **T3** | 1505 | 41 | 0.58 | 30 | 127 |
| **T4** | 1788 | 43 | 0.64 | 37 | 132 |
| **T5** | 1844 | 42 | 0.73 | 35 | 130 |
| **T6** | 1616 | 40 | 0.86 | 33 | 123 |
| **T7** | 1856 | 43 | 0.54 | 35 | 121 |
| **T8** | 1915 | 41 | 0.54 | 33 | 114 |
| **T9** | 1748 | 41 | 0.55 | 30 | 104 |
| **T10** | 1531 | 40 | 0.64 | 28 | 111 |
| **T11** | 1660 | 46 | 0.38 | 40 | 157 |
| **T12** | 1831 | 43 | 0.52 | 37 | 133 |

### Environmental Stability Testing

The compositions of Blend Set-T were also tested for their environmental stability to establish the stability of the blends to UV radiation exposure and resistance to rainwater induced hydrolysis of the biopolymers within the blends. The environmental stability investigations involved subjecting samples of the blends to accelerated weathering conditions over a period of 0 to 6000h, simulating 0 to 6 years in the field of application, and by monitoring the break-down of samples of the blends.

The accelerated weathering tests were investigated using Weatherometer Q-Lab QSUN XE3. The tests were carried out following the ISO 4892-2 Method A cycle 1 specific to the Northern European conditions.

Test Conditions used were as follows:
- Xenon Arc lamps - 1800 Watt
- 340 Nm wavelength @ 0.51 W/m2
- 38 °C Chamber Air Temperature
- 65 °C Black Panel Temperature
- 50% Relative Humidity
- Continuous UV light cycle:
- 102 mins light
- 18 mins light + spray

Based on these test conditions, 1000h corresponds to one year in the field of application. As the weathering tests were performed over an exposure period of 0 to 6000h in the weathering chamber, the results obtained correspond to 0 to 6 years in the field of application. For the investigation, samples were prepared using blends T1 to T12 of Blend Set-T (see Table 9 and 10) that have different ratios of the biodegradable polymers and non-toxic additives. The 12 blends were first extruded into filaments, chopped into flakes and subsequently subjected to an injection moulding process to prepare samples in the shape of rectangular bars having the dimension of 60x10x1 mm. Triplicates of each blend were prepared for each 1000h test period. At the interval of each 1000h exposure, the triplicate samples of each blend were taken out of the environmental chamber and were subjected to extensive analyses to establish the performance of the 12 blends under the accelerated weathering conditions, as described in more detail below.

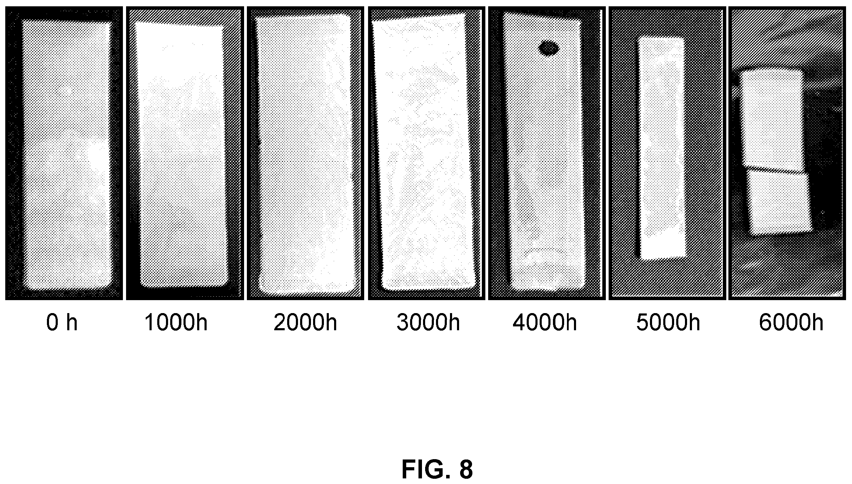

Figure 8 shows example photographs typical of all sample taken at each 1000h exposure time during the accelerated weathering tests. The photographs shown in Figure 8 indicate the absence of any visible deterioration due to accelerating weathering tests at 0 to 5000 h. In contrast, it can be seen that the samples begin to deteriorate/break-down after 6000h of exposure to accelerated weathering conditions.

### FTIR Analysis

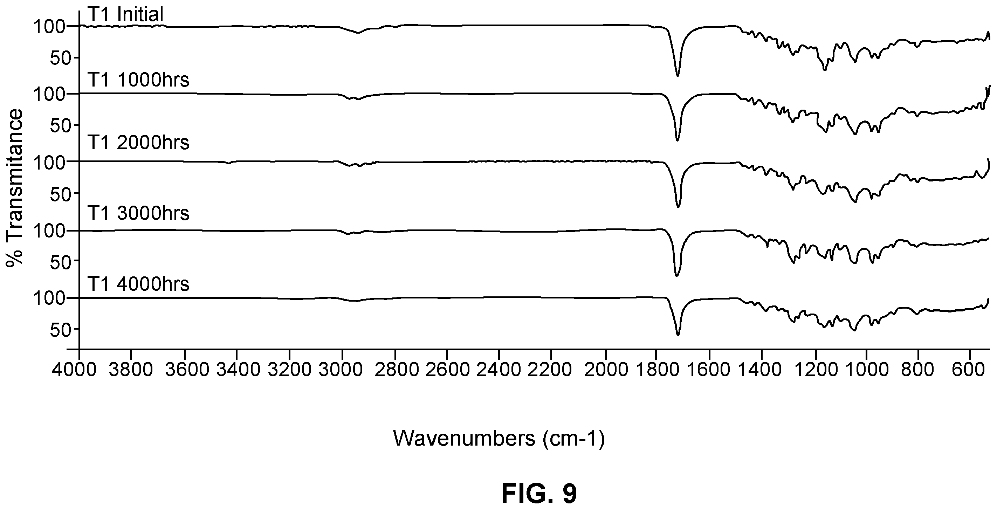

The samples at each 1000h exposure time were also analysed by FTIR using Nicolet iS20 FTIR Spectrometer from Thermo Scientific. A typical FTIR spectrum of any sample at 0h, 1000h, 2000h 3000h and 4000h is shown in Figure 9. The presence of a band around 1670 cm-1 is indicative of carbonyl groups (C=O) associated with ester groups (-COOR) of the biopolymers. The same results were observed for the FTIR spectra of samples from all 12 blends after 5000h and 6000h. No new peaks were observed during the testing period; of particular note is the absence of new carbonyl group peaks associated with the formation of carboxylic groups (-COOH) or -OH groups. This clearly indicates the absence of any polymer degradation due to water-induced hydrolysis during accelerated weathering tests.

### Optical Microscopy Analysis

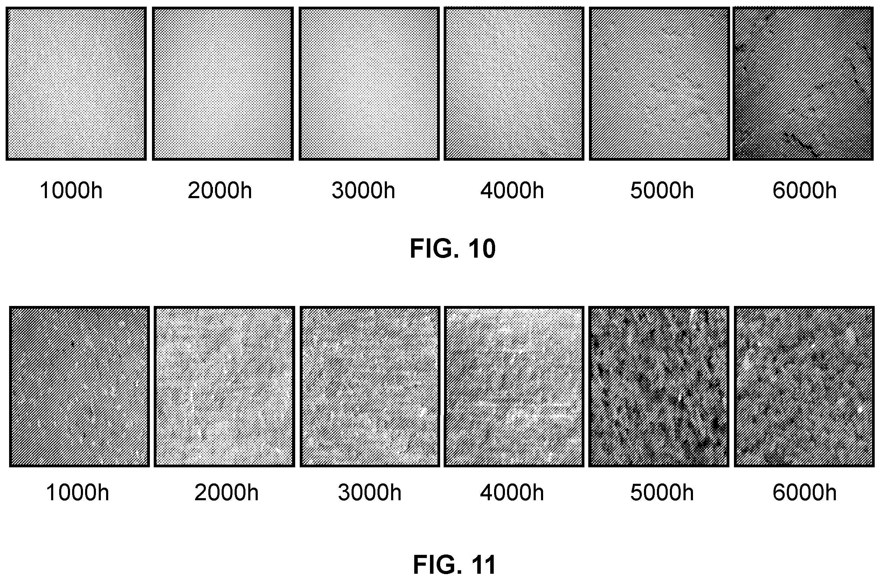

Samples at each 1000h exposure time were analysed using a Brunel Stereomicroscope equipped with a UCMOS digital Camera and a 20x lens. Figure 10 shows representative Optical microscopy images of samples after 1000h, 2000h, 3000h, 4000h 5000h and 6000h exposure to accelerated weathering conditions. As can be seen in Figure 10, no visible surface deterioration was observed after 1000h, 2000h, 3000h and 4000h exposure to accelerated weathering conditions. In contrast, Figure 10 shows surface deteriorations after 5000h and 6000h exposure to accelerated weathering conditions, which indicates good environmental stability up to 5000h (simulating 5 years in agricultural and horticultural applications).

### Scanning Electron Microscopy (SEM) Analysis

Samples at each 1000h exposure time were further analysed using Hitachi SU8230 field-emission scanning electron microscope, using magnification x500; Scale Bar of 100µm. Figure 11 shows representative SEM images of samples after 1000h, 2000h, 3000h, 4000h 5000h and 6000h exposure. No visible surface deterioration was observed after 1000h, 2000h, 3000h and 4000h of exposure to accelerated weathering conditions. However, Figure 11 shows significant deterioration for samples after 5000h and 6000h of weathering. This was also evidenced by increasing surface roughness, i.e., evidence of surface erosion. This trend was repeated across the samples from all 12 blends.

### Thermal stability and weight loss

The thermal stability and weight loss of each sample at different exposure times of accelerated weathering were analysed by thermogravimetric analysis (TGA) using a PerkinElmer Pyris 1. Small pieces of the samples (approximately 30 mg) were placed into a platinum crucible and heated in air to 120 °C at a rate of 20 °C/min where they were held for 45 minute to remove any moisture from the sample. The temperature was then increased to 550 °C at a rate of 10 °C and then held at 550 °C for 30 minutes to ensure all combustible residue was removed.

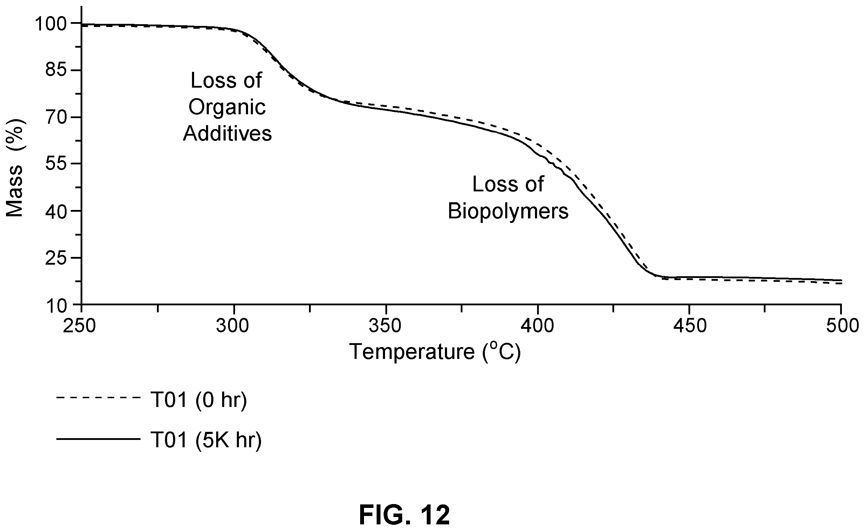

TGA results obtained from a typical sample at 0h and 5000h (simulating 5 years in agricultural and horticultural applications) are shown in Figure 12. The results indicate that the organic additives within the samples thermally degrade between 300 °C and 325 °C and that the biopolymers in the samples thermally degrade between 375 °C and 440 °C, leaving the residues of inorganic additives. Moreover, a comparison of the TGA thermographs shows that the weight loss pattern for samples at 0h and 5000h are superimposable, within experimental error, ruling out any major weight loss as a result of degradation of samples due to water induced hydrolysis during the exposure to accelerated weathering conditions.

### Summary of Environmental Stability Testing

In summary, no visible surface deteriorations or fragility were observed for any of the blends after 1000h, 2000h, 3000h and 4000h of exposure to accelerated weathering conditions. Some surface deterioration for samples after 5000h of accelerated weathering was observed, as evidenced by increased surface roughness, i.e., surface erosion. Samples exposed to 6000h of accelerated weathering conditions became very fragile, breaking easily, and fragmenting into smaller pieces. Of all 12 blends tested, blends T1, T4, and T12 performed the best in terms of desired modulus (1500-2000 MPa), yield stress (40-50 MPa), flexural strength (30-40 MPa), water uptake (less than 0.9%), scratch hardness (greater than 100 MPa), and accelerated weathering testing (0h to 6000h, representative of up to 6 years in the field of application of agriculture and horticulture), which is most desirable for applications where delay in biodegradation may be required, e.g., biodegradable tree guards, cable ties and weed mats.

### Cable Ties Compositions

Twelve polymer blend formulations comprising variable ratios of PBS, PHBV and PCL were prepared, as detailed in Table 11 below. Glycerol, a liquid by-product, was used in the formulation to act as a plasticiser.

**Table 11: Composition of blends for cable tie**

| **Blend No** | **PBS wt%** | **PHBV wt%** | **PCL wt%** | **Glycerol wt%** |
|---|---|---|---|---|
| 1 | 90 | 6 | 0 | 4 |
| 2 | 86 | 6 | 4 | 4 |
| 3 | 88 | 8 | 0 | 4 |
| 4 | 84 | 8 | 4 | 4 |
| 5 | 84 | 12 | 0 | 4 |
| 6 | 80 | 12 | 4 | 4 |
| 7 | 80 | 16 | 0 | 4 |
| 8 | 76 | 16 | 4 | 4 |
| 9 | 74 | 14 | 8 | 4 |
| 10 | 72 | 18 | 6 | 4 |
| 11 | 72 | 22 | 2 | 4 |
| 12 | 70 | 22 | 4 | 4 |

Each blend was processed as described above and using the conditions summarised in Table 3. Dog-bone samples were again prepared for tensile measurements meeting the specifications of ISO-527-2 Type 1BA, as shown in Figure 2, using the conditions in Table 4. The mechanical properties of candidate formulations were tested to determine their suitability for use in cable ties, as described in more detail below.

### Tensile Measurements

The twelve cable tie blends were subjected to tensile measurements to determine the Modulus and Yield Stress. Testing was carried out using an Instron 5967 Universal Mechanical Testing machine using a 30 kN load cell. This was used together with 10kN screw action grips to prevent specimen slippage. Tests were carried out according to the ISO527-2 standard where possible. The results of the tensile measurements are shown in Table 12 below.

**Table 12: Tensile measurement data for 12 blends for cable ties and visual observations made of the flexibility of each blend.**

| Blend No | Modulus MPa | Yield Stress MPa | Bending at 180 degrees | Bend angle before plastic deformation |
|---|---|---|---|---|
| ***1*** | 513 | 44 | Y | 160 |
| ***2*** | 436 | 38 | Y | 140 |
| ***3*** | 573 | 43 | Y | 120 |
| ***4*** | 520 | 45 | Y | 100 |
| ***5*** | 559 | 45 | Y | 90 |
| ***6*** | 536 | 42 | Y | 80 |
| ***7*** | 680 | 44 | Y | 90 |
| ***8*** | 708 | 42 | Y | 90 |
| ***9*** | 614 | 41 | Y | 80 |
| ***10*** | 672 | 43 | Y | 80 |
| ***11*** | 822 | 44 | Y | 70 |
| ***12*** | 513 | 44 | Y | 160 |

Alongside the tensile measurement data, observations were made of the flexibility of each blend by manually manipulating the extruded filament. The ability of the filament to withstand a 180-degree bend without breaking, and the maximum bend angle before plastic deformation occurred were recorded. Based on a combination of these observations and the tensile testing results, the six most promising blends for use as cable ties were selected for further testing. The six blends 1, 2, 4, 6, 8, and 9 were selected based on having the best balance of tensile strength and flexibility, as well as having a range of compositions to enable a fuller understanding of the formulation space.

### Melt Rheology Analysis

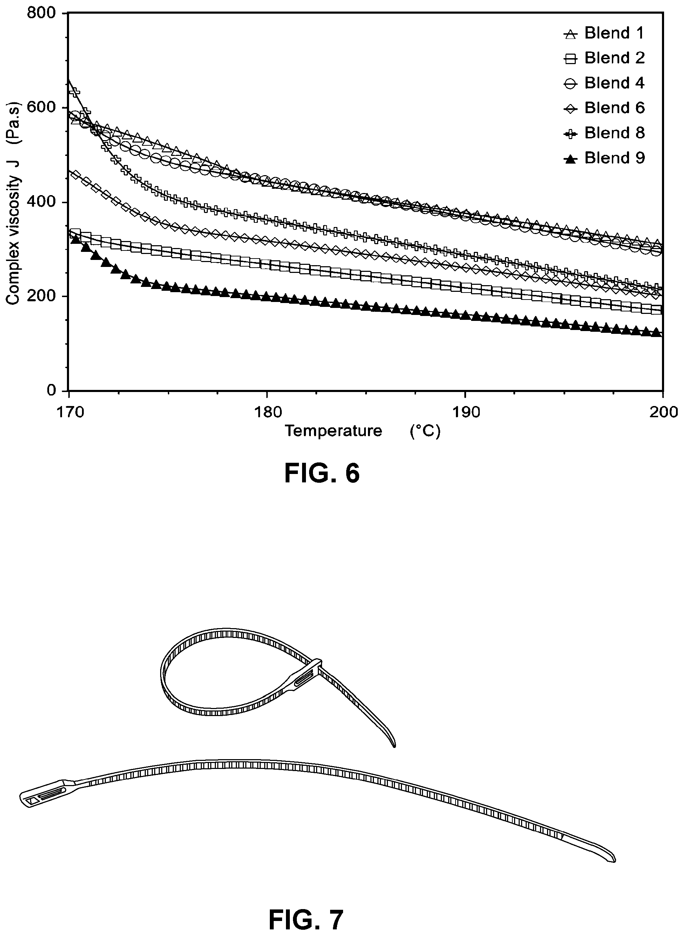

Melt rheology was carried out using a TA instruments DHR2 for the six selected blends to determine their flow properties with the aim of predicting suitability for 3D printing. All samples were subjected to a temperature ramp experiment across the range 140 °C to 200 °C at a rate of 5 °C/min. As shown in Figure 6, all blends behaved in a similar manner above 175 °C, where all viscosities are within a printable range. Blend 1 exhibited the lowest viscosity.

### Thermogravimetric Analysis

The six selected blends were analysed using thermogravimetric analysis (TGA) on a Perkin Elmer Pyris 1. Samples were heated, in air, from room temperature to 120 °C at 10 °C per minute before being held at 120 °C for 45 minutes to allow any water content to evaporate. The samples were then heated to 550 °C at 10 °C per minute causing complete thermal decomposition. The data recorded allow the onset of thermal degradation for each blend and these are reported in Table 13.

**Table 13: Thermal Gravimetric analysis in air of selected blends for cable ties.**

| Blend No | **Onset of degradation / °C** | **Mass Loss Below 120 °C** |
|---|---|---|
| 1 | 304 | 1.7% |
| 2 | 303 | 1.8% |
| 4 | 296 | 2.0% |
| 6 | 306 | 1.7% |
| 8 | 305 | 1.5% |
| 9 | 293 | 2.8% |

The TGA data shows that for all blends the onset of thermal degradation occurs at similar temperatures of around 300 °C, well above the temperatures used to process these blends indicating that (in the absence of water) thermal decomposition of the blends due to melt processing is unlikely.

A further piece of information that can be determined from TGA is the presence of volatile components such as water in the blend. The isothermal step at 120 °C allows any volatile components to evaporate off and the residual mass at the end of this step gives an indication of their mass fraction. The mass loss for each blend at the end of each dwell step is also shown in Table 13. Each of the blends is observed to stabilise once it has lost approximately 2 wt. % of its initial mass. Based on the known composition of the blends, this mass loss could be attributed to the evaporation of either water or glycerol. However, since this mass loss begins at >100 °C, it is unlikely to be the result of water in the blend. Coupled with this, the absence of a mass loss that could be attributed to the evaporation of glycerol at higher temperature confirms this drop in mass is likely to be due to evaporation of glycerol.

Comparing the magnitude of the loss in mass for the volatile components to the known loading of glycerol in the formulations shows a discrepancy, as the formulations tested all contain glycerol at 4 wt. %. It is postulated that this difference in glycerol content is due to evaporation of glycerol occurring during extrusion and it is likely that the loading of glycerol in the final formulations is lower than intended.

### Dynamic vapour sorption

Dynamic vapour sorption (DVS) was used to better understand the behaviour of the blends when exposed to differing humidities. The three most promising blends, namely blend 1, 4 and 9, were analysed by DVS. The extruded chip of each blend was conditioned in the lab atmosphere for a week before analysis to allow its water content to stabilise. Analysis was performed on a Surface Measurement Systems Advantage 1 DVS instrument. A small sample (approx. 20 mg) of each polymer was placed into the instrument sample pan and its mass measured against that of a reference pan as both were cycled through a range of humidity values between 20% and 80%. This allows both the rate of water uptake and release for the blends to be studied. Samples were exposed to each condition for up to a maximum of 20 hours, or until a stable mass was reached.

Blend 9 was observed to have the highest water uptake of the three blends tested (results not shown), followed by blend 4 with blend 1 having the lowest water uptake. This appears to indicate that increasing the PHBV content of the blend increases the rate degree to which the blend takes up water. Even after 20 hours at 60 or 80 % relative humidity the mass of all three blends had not stabilised and was continuing to increase showing a significant affinity for water.

### 3D Printing Test Pieces

In order to trial the printability of the six selected blends (blends 1, 2, 4, 6, 8 and 9) a 3D printable filament had to be produced from each of the formulations. This process is described in more detail below.

The six selected blends were extruded in larger quantities using ThermoFisher Haake Rheomex PTW 16 OS twin screw extruder for the Polylab OS system configured with a three-strand die to maximise throughput (16 mm screw diameter, L/D ratio 40:1). Blends 1, 2, 4, 6, 8 and 9 were mixed manually at a 250 g scale and melt processed using the conditions outlined in Table 3. The extrudate was passed through a cool water bath to solidify before the strand was chipped using a Scheer SGS-25-E4 pelletizer to form a uniform pellet. After extrusion, all blends were dried in the Motan Luxor CA15 for 3-4 hours at 75 °C before being vacuum sealed in order to avoid moisture ingress.

In order to produce a printable filament, each of the blends was re-extruded using a 3devo precision 350 filament maker. This is a single screw extruder that allows production of a filament with precisely controlled diameter for use in 3D printing. In order to optimise the extrusion of a well-controlled filament, slightly different extrusion conditions were required for each of the formulations. As was found previously, formulations with increased loadings of PHBV were found to require higher extrusion temperatures than those with a higher proportion of PBS. The extrusion conditions used are recorded in Table 14 below. During extrusion, it was noted that the filament's measured diameter was higher than the value indicated on the extruder suggesting that the formulations swell as they cool. In order to compensate, the extruder was set to produce a filament of 1.5 mm diameter, which corresponded to a measured filament diameter of 1.75 mm.

**Table 14: The conditions used for extrusion of filament from each formulation**

| **Blend No** | **Extrusion Temperature / °C** | **Screw Speed / rpm** |
|---|---|---|
| ***1*** | 165-180 | 2.5 |
| ***2*** | 170-180 | 2.5 |
| ***4*** | 165-180 | 2.0 |
| ***6*** | 165-180 | 2.0 |
| ***8*** | 175-180 | 2.0 |
| ***9*** | 175-185 | 2.0 |

All six blends were printed using a Raise Pro 2 FDM 3D printer. Small test pieces were printed using an extruder temperature of 180 °C, platform temperature of 40 °C and a print speed of 60 mm/s.

Based on the good flexibility and good printability observed during the initial 3D printing of test cable ties, blend 1 was selected for printing of a cable tie test specimen. The 3devo precision 350 filament maker was again used to produce filaments from blend 1 with precisely controlled diameter for use in 3D printing of cable tie test specimen.

A Raise Pro2 FDM printer was used with the following parameters:
- Extruder temperature - 180°C
- Platform temperature - no heating, i.e., ambient temperature
- First layer print speed - 30 mm/s
- Subsequent layer print speed - 60 mm/s

Using the conditions outlined above, a cable tie was successfully 3D printed using blend 1, as shown in Figure 7.

It will be appreciated by persons skilled in the art that the above embodiment has been described by way of example only and not in any limitative sense, and that various alterations and modifications are possible without departing from the scope of the invention as defined by the appended claims.

## Claims

1. A biodegradable plastic composition, comprising:
poly(butylene succinate) (PBS) in an amount between 28 to 90 wt.%;
poly(3-hydroxybutyrate-co-valerate) (PHBV) in an amount between 5 to 35 wt.%; and
at least one of:
a) a biodegradation delay polymer (BDP) in the amount of 10 wt.% or less, wherein the BDP comprises polycaprolactone (PCL), poly(butylene sebacate) (PBSeb) or a combination thereof; and
b) a plasticiser in an amount of 13 wt.% or less, wherein the plasticiser comprises a citric acid ester, glycerol, glycerol triacetate or a combination thereof.

2. The biodegradable plastic composition of claim 1, wherein the BDP is present in an amount of 5 wt% or less.

3. The biodegradable plastic composition of claim 1 or claim 2, further comprising one or more antidegradation agents, wherein the antidegradation agent is selected from the group consisting of a hydrophobic additive, an inorganic filler, an antioxidant and/or a UV stabiliser; and
optionally wherein the one or more antidegradation agents are further defined by any of (i) to (iv):
(i) the hydrophobic additive comprises a natural wax, optionally wherein the natural wax is selected from eurikas wax, carnauba wax, sunflower wax, bees wax, rice bran wax, candelilla wax, or a combination thereof;
(ii) the inorganic filler is selected from mica, silica (silicon dioxide), calcium metasilicate, calcium carbonate, china clay (Kaolin), a biochar material, or a combination thereof;
(iii) the antioxidant is selected from ascorbic acid and/or ethyl maltol;
(iv) the UV stabiliser is 2-(2'-hydroxy-5'-methylphenyl)benzotriazole or 4-hydroxy-2,2,6,6-tetramethyl-1-piperidine ethanol-dimethyl succinate copolymer.

4. The biodegradable plastic composition of any preceding claim, further comprising a reinforcing filler, optionally wherein the reinforcing filler comprises a natural fibre is selected from the group consisting of jute, hemp, flax, pineapple, rice husks, bamboo fibre, coconut fibre, banana fibre, rhubarb fibre or any combinations thereof.

5. The biodegradable plastic composition of any preceding claim, further comprising an animal repellent, optionally wherein the animal repellent is sucrose octaacetate.

6. The biodegradable plastic composition of any preceding claim, wherein the biodegradation plastic composition is non-toxic to avoid pollution of the surrounding environment.

7. A tree guard formed from a biodegradable plastic composition comprising: poly(butylene succinate) (PBS) in an amount between 28 to 90 wt.%; poly(3-hydroxybutyrate-co-valerate) (PHBV) in an amount between 5 to 35 wt.%; and a biodegradation delay polymer (BDP) in the amount of 10 wt.% or less, wherein the BDP comprises polycaprolactone (PCL), poly(butylene sebacate) (PBSeb) or a combination thereof.

8. The tree guard of claim 7, wherein the biodegradable plastic composition further comprises a plasticiser in an amount of 13 wt.% or less, wherein the plasticiser comprises a citric acid ester, glycerol or glycerol triacetate; and/or
wherein the biodegradable plastic composition further comprises:
an inorganic filler in an amount of 30 wt.% or less;
an antioxidant in an amount of 1 wt.% or less;
an animal repellent in an amount of 1 wt.% or less;
a hydrophobic additive in an amount between 0 and 10 wt.%;
a reinforcing filler in an amount between 0 and 30 wt.%; and
a UV stabiliser in an amount between 0 and 1 wt.%.

9. The tree guard of claim 7 or claim 8, wherein the tree guard is coated with a hydrophobic coating, optionally wherein the hydrophobic coating comprises a natural wax selected from the group consisting of eurikas wax, carnauba wax, sunflower wax, bees wax, rice bran wax, candelilla wax, or a combination thereof.

10. A cable tie formed from a biodegradable plastic composition comprising poly(butylene succinate) (PBS) in an amount between 28 to 90 wt.%;
poly(3-hydroxybutyrate-co-valerate) (PHBV) in an amount between 5 to 35 wt.%; and; a plasticiser comprising a citric acid ester, glycerol or glycerol triacetate in an amount of 13 wt.% or less.

11. The cable tie of claim 10, wherein the biodegradable plastic composition further comprises a biodegradation delay polymer (BDP) in the amount of 10 wt.% or less, wherein the BDP comprises polycaprolactone (PCL), poly(butylene sebacate) (PBSeb) or a combination thereof.

12. An article comprising the biodegradable plastic composition according to claims 1 to 6.

13. The article of claim 12, wherein the article comprises one of the following: a forestry product, an agricultural product, horticulture product, or a viticulture product or a packaging product; and/or wherein the article comprises one of the following: a seed guard, a plant guard, a tree guard, a cable tie or a weed mat.

14. A method of forming the article of claim 12 or claim 13, comprising melt extruding, injection moulding, thermoforming or 3D printing the biodegradable plastic composition to form the article.

## Patentansprüche

1. Biologisch abbaubare Kunststoffzusammensetzung, umfassend:
Poly(butylensuccinat) (PBS) in einer Menge zwischen 28 und 90 Gew.-%;
Poly(3-Hydroxybutyrat-co-Valerat) (PHBV) in einer Menge zwischen 5 und 35 Gew.-%; und mindestens eines von Folgendem:
a) ein biologisch abbaubares, verzögernd wirkendes Polymer (BDP) in einer Menge von höchstens 10 Gew.-%, wobei das BDP Polycaprolacton (PCL), Poly(butylensebacat) (PBSeb) oder eine Kombination daraus umfasst; und
b) einen Weichmacher in einer Menge von höchstens 13 Gew.-%, wobei der Weichmacher einen Zitronensäureester, Glycerin, Glycerintriaacetat oder eine Kombination davon umfasst.

2. Biologisch abbaubare Kunststoffzusammensetzung nach Anspruch 1, wobei das BDP in einer Menge von 5 Gew.-% oder weniger vorliegt.

3. Biologisch abbaubare Kunststoffzusammensetzung nach Anspruch 1 oder 2, die ferner ein oder mehrere Abbaubeschleunigungsmittel umfasst, wobei das Abbaubeschleunigungsmittel aus der Gruppe ausgewählt ist, die aus einem hydrophoben Additiv, einem anorganischen Füllstoff, einem Antioxidationsmittel und/oder einem UV-Stabilisator besteht; und
wobei optional das eine oder die mehreren Antidegradationsmittel ferner durch eines von (i) bis (iv) definiert sind:
(i) das hydrophobe Additiv umfasst ein natürliches Wachs, wobei das natürliche Wachs gegebenenfalls aus Eurikas-Wachs, Carnauba-Wachs, Sonnenblumenwachs, Bienenwachs, Reiskleiewachs, Candelilla-Wachs oder einer Kombination davon ausgewählt ist;
(ii) der anorganische Füllstoff wird ausgewählt aus Glimmer, Siliziumdioxid, Calciumsilikat, Calciumcarbonat, Kaolin, einem Biokohle-Material oder einer Kombination davon;
(iii) das Antioxidans wird aus Ascorbinsäure und/oder Ethylmaltol ausgewählt;
(iv) der UV-Stabilisator ist 2-(2'-Hydroxy-5'-methylphenyl)benzotriazol oder ein Copolymer aus 4-Hydroxy-2,2,6,6-tetramethyl-1-piperidin und Ethanol-Dimethylsuccinat.

4. Biologisch abbaubare Kunststoffzusammensetzung nach einem der vorstehenden Ansprüche, die ferner einen verstärkenden Füllstoff umfasst, wobei der verstärkende Füllstoff optional eine Naturfaser umfasst, die aus der Gruppe ausgewählt ist, bestehend aus Jute, Hanf, Flachs, Ananas, Reisschalen, Bambusfasern, Kokosfasern, Bananenfasern, Rhabarberfasern oder beliebigen Kombinationen davon.

5. Biologisch abbaubare Kunststoffzusammensetzung nach einem der vorstehenden Ansprüche, die ferner ein Tierabwehrmittel umfasst, wobei das Tierabwehrmittel optional Saccharoseoctaacetat ist.

6. Biologisch abbaubare Kunststoffzusammensetzung nach einem der vorstehenden Ansprüche, wobei die biologisch abbaubare Kunststoffzusammensetzung ungiftig ist, um eine Verschmutzung der Umgebung zu vermeiden.

7. Baumschutz aus einer biologisch abbaubaren Kunststoffzusammensetzung, umfassend: Poly(butylensuccinat) (PBS) in einer Menge zwischen 28 und 90 Gew.-%; Poly(3-hydroxybutyrat-co-valerat) (PHBV) in einer Menge zwischen 5 und 35 Gew.-%; und ein biologisch abbaubares Verzögerungspolymer (BDP) in einer Menge von 10 Gew.-% oder weniger, wobei das BDP Polycaprolacton (PCL), Poly(butylensebacat) (PBSeb) oder eine Kombination davon umfasst.

8. Baumschutz nach Anspruch 7, wobei die biologisch abbaubare Kunststoffzusammensetzung ferner einen Weichmacher in einer Menge von 13 Gew.-% oder weniger umfasst, wobei der Weichmacher einen Zitronensäureester, Glycerin oder Glycerintriaacetat umfasst; und/oder wobei die biologisch abbaubare Kunststoffzusammensetzung ferner Folgendes umfasst:
einen anorganischen Füllstoff in einer Menge von höchstens 30 Gew.-%;
ein Antioxidans in einer Menge von höchstens 1 Gew.-%;
ein Tierabwehrmittel in einer Menge von höchstens 1 Gew.-%;
ein hydrophobes Additiv in einer Menge zwischen 0 und 10 Gew.-%;
einen verstärkenden Füllstoff in einer Menge zwischen 0 und 30 Gew.-%; und
einen UV-Stabilisator in einer Menge zwischen 0 und 1 Gew.-%.

9. Baumschutz nach Anspruch 7 oder 8, wobei der Baumschutz mit einer hydrophoben Beschichtung versehen ist, wobei die hydrophobe Beschichtung optional ein natürliches Wachs umfasst, das aus der Gruppe ausgewählt ist, die aus Eurika-Wachs, Carnauba-Wachs, Sonnenblumenwachs, Bienenwachs, Reiskleiewachs, Candelilla-Wachs oder einer Kombination davon besteht.

10. Kabelbinder, hergestellt aus einer biologisch abbaubaren Kunststoffzusammensetzung, die Poly(butylensuccinat) (PBS) in einer Menge zwischen 28 und 90 Gew.-%;
Poly(3-hydroxybutyrat-co-valerat) (PHBV) in einer Menge zwischen 5 und 35 Gew.-%; und einen Weichmacher, der einen Zitronensäureester, Glycerin oder Glycerintriaacetat in einer Menge von 13 Gew.-% oder weniger umfasst.

11. Kabelbinder nach Anspruch 10, wobei die biologisch abbaubare Kunststoffzusammensetzung ferner ein den biologischen Abbau verzögerndes Polymer (BDP) in einer Menge von 10 Gew.-% oder weniger umfasst, wobei das BDP Polycaprolacton (PCL), Poly(Butylensebacat) (PBSeb) oder eine Kombination davon umfasst.

12. Gegenstand, der die biologisch abbaubare Kunststoffzusammensetzung nach den Ansprüchen 1 bis 6 umfasst.

13. Gegenstand nach Anspruch 12, wobei der Gegenstand eines von Folgendem umfasst: ein forstwirtschaftliches Produkt, ein landwirtschaftliches Produkt, ein gartenbauliches Produkt oder ein weinbauliches Produkt oder ein Verpackungsprodukt; und/oder wobei der Gegenstand eines von Folgendem umfasst: einen Saatgutschutz, einen Pflanzenschutz, einen Baumschutz, einen Kabelbinder oder eine Unkrautmatte.

14. Verfahren zur Herstellung des Gegenstands nach Anspruch 12 oder 13, umfassend das Schmelzextrudieren, Spritzgießen, Thermoformen oder 3D-Drucken der biologisch abbaubaren Kunststoffzusammensetzung zur Herstellung des Gegenstands.

## Revendications

1. Composition plastique biodégradable, comprenant :
du poly(succinate de butylène) (PBS) en une quantité comprise entre 28 et 90 % en poids ;
du poly(3-hydroxybutyrate-co-valérate) (PHBV) en une quantité comprise entre 5 et 35 % en poids ; et au moins l'un des composés suivants :
a) un polymère retardateur de biodégradation (BDP) en une quantité inférieure ou égale à 10 % en poids, le BDP comprenant de la polycaprolactone (PCL), du poly(sébacate de butylène) (PBSeb) ou une combinaison de ceux-ci ; et
b) un plastifiant en une quantité inférieure ou égale à 13 % en poids, dans laquelle le plastifiant comprend un ester d'acide citrique, du glycérol, du triacétate de glycérol ou une combinaison de ceux-ci.

2. Composition de plastique biodégradable selon la revendication 1, dans laquelle le BDP est présent en une quantité inférieure ou égale à 5 % en poids.

3. Composition plastique biodégradable selon la revendication 1 ou la revendication 2, comprenant en outre un ou plusieurs agents anti-dégradation, dans laquelle l'agent anti-dégradation est choisi parmi le groupe constitué d'un additif hydrophobe, d'une charge inorganique, d'un antioxydant et/ou d'un stabilisateur UV ; et
éventuellement, dans laquelle le ou les agents anti-dégradation sont en outre définis par l'un quelconque des éléments (i) à (iv) suivants :
(i) l'additif hydrophobe comprend une cire naturelle, éventuellement choisie parmi la cire d'Eurikas, la cire de carnauba, la cire de tournesol, la cire d'abeille, la cire de son de riz, la cire de candelilla ou une combinaison de celles-ci ;
(ii) la charge inorganique est choisie parmi le mica, la silice (dioxyde de silicium), le métasilicate de calcium, le carbonate de calcium, l'argile de Chine (kaolin), un matériau à base de biochar, ou une combinaison de ceux-ci ;
(iii) l'antioxydant est choisi parmi l'acide ascorbique et/ou l'éthylmaltol ;
(iv) le stabilisateur UV est le 2-(2'-hydroxy-5'-méthylphényl)benzotriazole ou un copolymère de 4-hydroxy-2,2,6,6-tétraméthyl-1-pipéridine et de succinate de diméthyle d'éthanol.

4. Composition plastique biodégradable selon l'une quelconque revendication précédente, comprenant en outre une charge de renforcement, dans laquelle, éventuellement, la charge de renforcement comprend une fibre naturelle choisie parmi le groupe constitué du jute, du chanvre, du lin, de l'ananas, des balles de riz, de la fibre de bambou, de la fibre de coco, de la fibre de bananier, de la fibre de rhubarbe ou de toute combinaison de celles-ci.

5. Composition plastique biodégradable selon l'une quelconque revendication précédente, comprenant en outre un répulsif pour animaux, dans laquelle, éventuellement, le répulsif pour animaux est de l'octaacétate de saccharose.

6. Composition plastique biodégradable selon l'une quelconque revendication précédente, dans laquelle la composition plastique biodégradable est non toxique afin d'éviter toute pollution de l'environnement.

7. Protecteur d'arbre constitué d'une composition plastique biodégradable comprenant : du poly(succinate de butylène) (PBS) en une quantité comprise entre 28 et 90 % en poids ; du poly(3-hydroxybutyrate-co-valérate) (PHBV) en une quantité comprise entre 5 et 35 % en poids ; et un polymère retardateur de biodégradation (BDP) en une quantité inférieure ou égale à 10 % en poids, le BDP comprenant de la polycaprolactone (PCL), du poly(sébacate de butylène) (PBSeb) ou une combinaison de ceux-ci.

8. Protecteur d'arbre selon la revendication 7, dans lequel la composition plastique biodégradable comprend en outre un plastifiant en une quantité inférieure ou égale à 13 % en poids, dans lequel le plastifiant comprend un ester d'acide citrique, du glycérol ou du triacétate de glycérol ; et/ou
dans lequel la composition plastique biodégradable comprend en outre :
une charge inorganique en une quantité inférieure ou égale à 30 % en poids ;
un antioxydant en une quantité inférieure ou égale à 1 % en poids ;
un répulsif pour animaux en une quantité inférieure ou égale à 1 % en poids ;
un additif hydrophobe en une quantité comprise entre 0 et 10 % en poids ;
une charge de renforcement en une quantité comprise entre 0 et 30 % en poids ; et
un stabilisateur UV en une quantité comprise entre 0 et 1 % en poids.

9. Protection d'arbre selon la revendication 7 ou la revendication 8, dans laquelle la protection d'arbre est recouverte d'un revêtement hydrophobe, et éventuellement dans laquelle le revêtement hydrophobe comprend une cire naturelle choisie parmi le groupe constitué de la cire d'Eurika, de la cire de carnauba, de la cire de tournesol, de la cire d'abeille, de la cire de son de riz, de la cire de candelilla ou d'une combinaison de celles-ci.

10. Collier de serrage formé à partir d'une composition plastique biodégradable comprenant du poly(succinate de butylène) (PBS) en une quantité comprise entre 28 et 90 % en poids ;
du poly(3-hydroxybutyrate-co-valérate) (PHBV) en une proportion comprise entre 5 et 35 % en poids ; et un plastifiant comprenant un ester d'acide citrique, du glycérol ou du triacétate de glycérol en une proportion inférieure ou égale à 13 % en poids.

11. Attache de câble selon la revendication 10, dans laquelle la composition plastique biodégradable comprend en outre un polymère retardateur de biodégradation (BDP) en une quantité inférieure ou égale à 10 % en poids, le BDP comprenant de la polycaprolactone (PCL), du poly(sébacate de butylène) (PBSeb) ou une combinaison de ceux-ci.

12. Article comprenant la composition de plastique biodégradable selon les revendications 1 à 6.

13. Article selon la revendication 12, dans lequel l'article comprend l'un des éléments suivants : un produit forestier, un produit agricole, un produit horticole, ou un produit viticole ou un produit d'emballage ; et/ou dans lequel l'article comprend l'un des éléments suivants : un protège-graines, un protège-plante, un protège-arbre, un serre-câble ou un tapis anti-mauvaises herbes.

14. Procédé de fabrication de l'article selon la revendication 12 ou la revendication 13, comprenant l'extrusion à l'état fondu, le moulage par injection, le thermoformage ou l'impression 3D de la composition plastique biodégradable afin de former l'article.
